# EUROPEAN PATENT APPLICATION

(11) **EP 2 436 922 A1**
(43) Date of publication of application: **04.04.2012**
(21) Application number: 10186400.7
(22) Date of filing: 04.10.2010
(51) Int. Cl.: F03D 11/00

(54) **Arrangement to supply a sensor in a wind turbine blade with electrical power**

(71) Applicant: Siemens Aktiengesellschaft, 80333 München (DE)
(72) Inventor: Andersen, Jimmi, 7500, Holstebro (DK)

(57) **Abstract**

The invention relates to an arrangement to supply an active electrical component with electrical power, while the component is arranged asides a wind turbine blade. A kinetic charger is connected with the component. The kinetic charger is designed and constructed to transform mechanical movements of the blade into electrical power, while the power generated by the kinetic charger is supplied to the component.

## Description

The invention relates to an arrangement to supply an active electrical component with electrical power, while the component is arranged asides a wind turbine blade.

It is known to use an active electrical component, which is arranged asides a wind turbine blade.

This kind of electrical component needs to be supplied with electrical energy.

It is possible to supply the component by electrical lines like cables. The cables are guided from an external power supply through the hub of the wind turbine and to the component asides the blade.

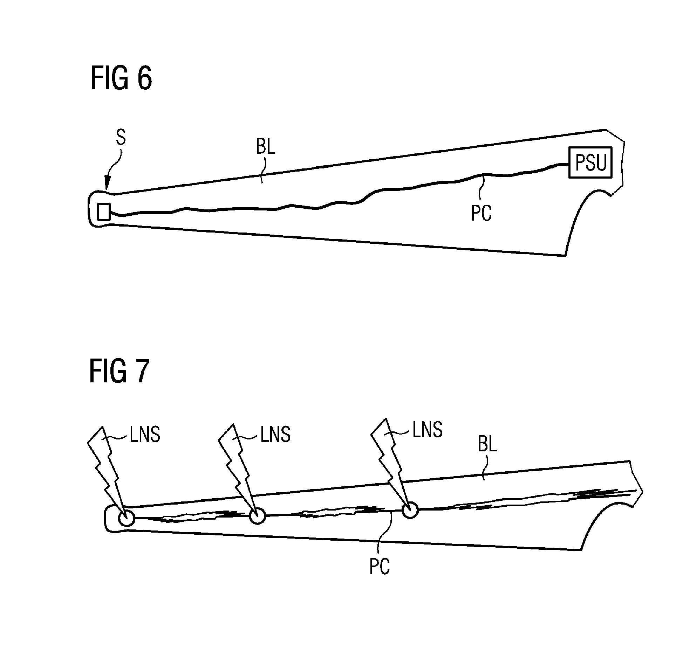

This situation is shown in FIG 6, where a sensor S is arranged as active electrical component within a blade BL. The sensor S is supplied with electrical power by a power supply unit PSU. The unit PSU is connected with the sensor S by a number of power cables PC, which are used to transmit the energy needed.

This cabling PC along the blade BL is very critical, as the blade BL is exposed to lightning strikes LNS, as shown in FIG 7.

When the blade BL is hit by a lightning LNS the lightning energy will be guided to the sensor S asides the blade BL and back to the wind turbine, too. Its external power supply PSU and other electronic systems might be damaged by the lightning passing through the cables PC.

The blades of a wind turbine are hit by lightning strikes very often, e.g. 12 lightning strikes during a period of three years have been observed at an offshore wind turbine. It is therefore the aim of the invention, to provide an improved arrangement to supply an active electrical component with electrical power in view to lightning strikes - while the component is arranged asides a wind turbine blade.

This aim is reached by the features of claim 1. Preferred configurations are object of the dependent claims.

According to the invention, the arrangement invented contains an electrical component, which is arranged asides the blade of the wind turbine.

Preferably the component is arranged close to the tip end of the blade.

Preferably the component is a sensor, which is used to monitor the blade of the wind turbine.

The component might measure the deflection of the blade for example or it might measure movements of the blade.

Preferably the deflection-sensor contains a radar transmitter. Thus measured signals are transmitted wireless to a receiver, which may be arranged asides the nacelle of the wind turbine.

A kinetic charger, which is connected with the component, is also arranged asides the blade.

The kinetic charger transforms any kind of movement of the blade into electrical power. The power generated is supplied to the component.

Preferably the kinetic charger transforms mechanic vibrations of the blade into electrical power.

Preferably the kinetic charger is arranged near the tip end of the blade. Thus the arrangement uses the effect that the tip of the blade moves in three dimensions, even if the blade of the wind turbine is turning or not.

Thus electrical power is generated when the blade is turning.

Of course the kinetic charger can be arranged at each appropriate position at or within the blade.

It is even generated when the wind, which acts on the blade, is too weak for the turning of the blade. This weak wind results also into three-dimensional vibration-movements of the tip.

Preferably the power, which is generated by the kinetic charger, is used to charge a battery. The battery might be used to supply the component in a specific situation, where the power generated by the kinetic charger needs to be assisted by the power, which is stored within the battery.

Preferably the kinetic charger is arranged close to the electric component or the kinetic charger is an integrated part of the component.

Preferably one kinetic charger is installed together with the supplied component in each blade of the wind turbine.

Preferably each sensor is supplied by its own kinetic charger.

Preferably the kinetic charger is designed and constructed to transform potential energy into electricity. Potential energy is stored within a physical system as a result of the position or configuration of different parts of the system.

For example an object is brought from a lower energy position into a higher energy position. This position-change may be performed by mechanic movements of the blade like vibrations of the blade or due to the turning-movement of the wind turbine blade. As the object show a dedicated mass a resulting potential energy is stored when the object is within the higher energy position.

If the object is brought into the lower energy position the energy stored is set free and can be can transformed into electrical power.

For the movement of the object into the lower energy position the gravity-force or the force of an expanded spring may be used as so called "restoring-force".

The arrangement invented allows the supply of the component without additional risks in view to lightning strikes.

Additionally no electrical cabling is needed between the wind turbine and the blade for the power-supply of the component.

The arrangement is cheap and might be brought into already existing and even mounted blades even later. Thus a retrofit of existing blades is ensured very easily.

The whole arrangement invented might be arranged into a cavity of the blade to be fixed there. The signals of the component might be transferred wireless (as radio transfer or as optical transfer or the like). Thus the component would not need any additional cabling to perform its tasks inside the blade.

The invention is shown in more detail by help of some figures.

The figures show preferred configurations and do not limit the scope of the invention.
- FIG 1: shows a wind turbine, which is fitted according to the invention,
- FIG 2: shows a first configuration of the arrangement invented,
- FIG 3: shows a first configuration of the arrangement invented,
- FIG 4 and FIG 5: show measured tip-deflections of a wind turbine blade to be used according to the invention, and.
- FIG 6 and FIG 7: show the prior art as described in the introduction part of this application.

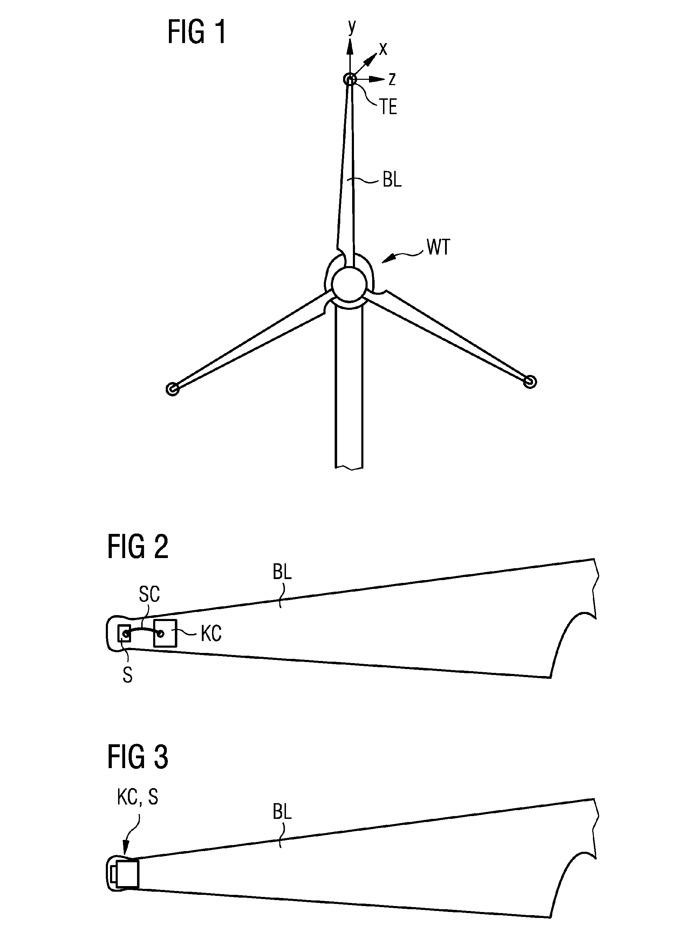

FIG 1 shows a wind turbine WT, which is fitted according to the invention.

The kinetic charger and the component (as shown in FIG 2) are preferably arranged close to the tip end TE of the blade BL.

The tip end TE moves in three dimensions x, y and z - even if the blade BL is turning or not.

FIG 2 shows a first configuration of the arrangement invented.

A sensor S is located as electrical component asides the blade BL.

Preferably the sensor S is located within a cavity (not shon in detail) of the blade BL.

Preferably the sensor S is arranged close to the tip end of the blade BL.

The kinetic charger KC is connected with the sensor S by short cables SC.

A lightning may not strike the cables SC due their short length.

FIG 3 shows a second configuration of the arrangement invented.

The kinetic charger KC and the sensor S are preferably arranged into a common housing. Thus they are an integrated part of each other.

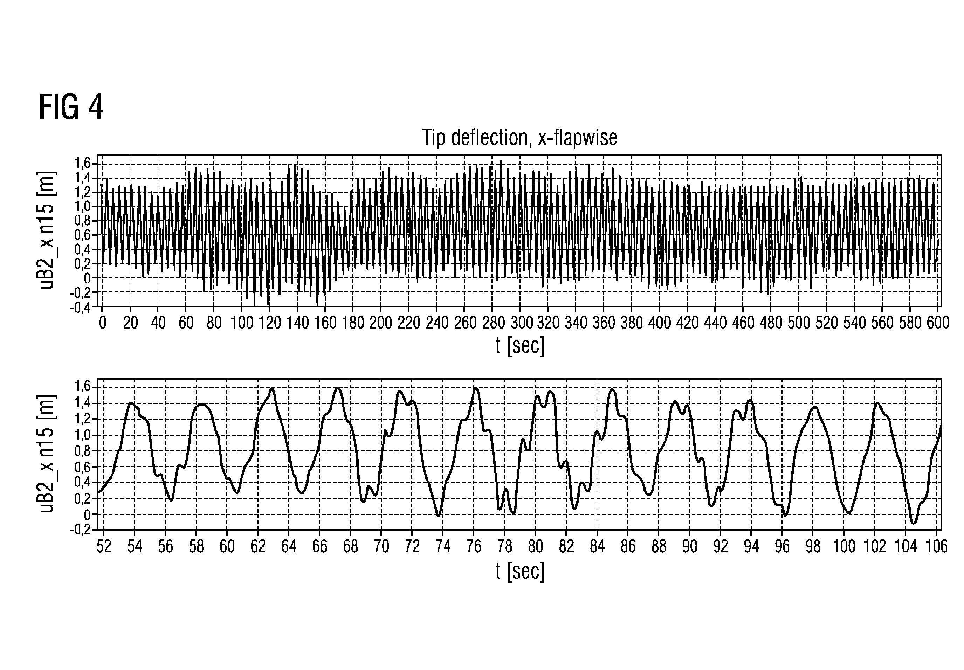

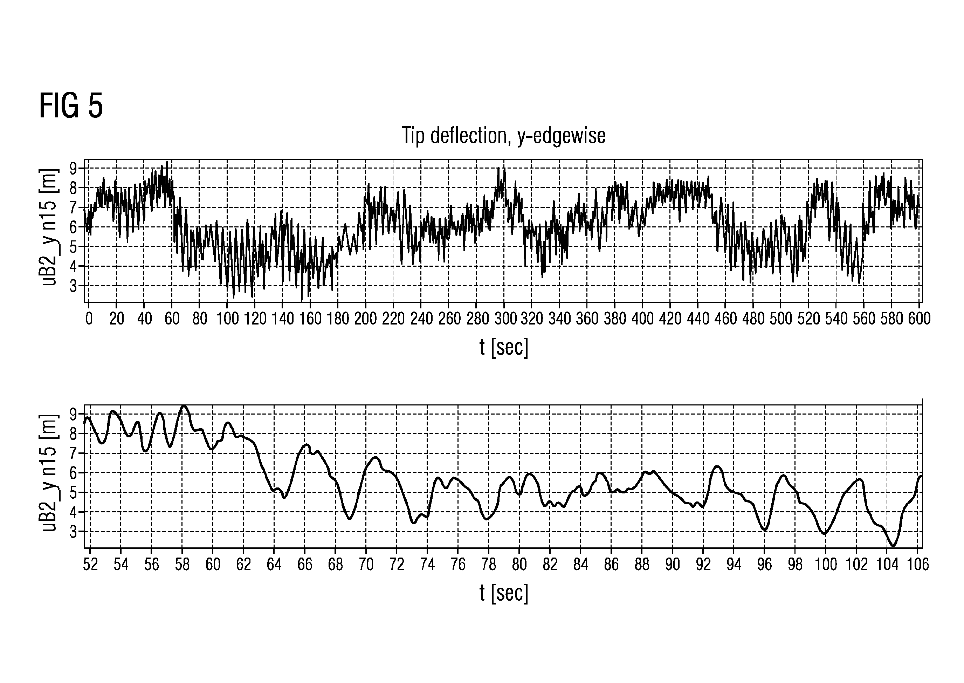

FIG 4 and FIG 5 show measured and averaged tip-deflections of a wind turbine blade.

Reference is made to FIG 1 in view of the x-edgewise and y-edgewise "tip deflection".

The tip deflection is used by the kinetic charger to generate electrical power out form the movements of the tip.

## Claims

1. Arrangement to supply an active electrical component with electrical power,
- where the component is arranged asides a blade of a wind turbine,
- where a kinetic charger is connected with the component,
- where the kinetic charger is designed and constructed to transform mechanical movements of the blade into electrical power, while the power generated by the kinetic charger is supplied to the component.

2. Arrangement according to claim 1, where the kinetic charger is arranged close to the tip end of the blade.

3. Arrangement according to claim 1 or claim 2, where the component is arranged close to the tip end of the blade.

4. Arrangement according to claim 1, where the component is a sensor, which is used to monitor a deflection of the blade or which is used to measure movements of the blade.

5. Arrangement according to claim 1, where the component contains a transmitter, which is used to transmit signals wireless from the component to a remote receiver.

6. Arrangement according to claim 1, where the kinetic charger is constructed
- to transform mechanic vibrations of the blade into electrical power, and/or
- to transform the turning movement of the blade into electrical power.

7. Arrangement according to claim 1, where the kinetic charger is arranged to supply the power generated into a battery.

8. Arrangement according to claim 1, where the kinetic charger is arranged close to the electric component or where the kinetic charger is an integrated part of the component.

9. Arrangement according to claim 1, where the kinetic charger and the component, which is assigned to the kinetic charger, are arranged at or are arranged within each blade of the wind turbine.

10. Arrangement according to claim 1, where the kinetic charger and the component, which is assigned to the kinetic charger, are arranged within a cavity of the blade.
